# EUROPEAN PATENT SPECIFICATION

(11) **EP 4 523 319 B1**
(45) Date of publication and mention of the grant of the patent: **27.08.2025**
(21) Application number: 23741159.0
(22) Date of filing: 06.06.2023
(51) Int. Cl.: H02M 1/00, H02M 3/158, H02M 7/483

(54) **SINGLE-PHASE, THREE-LEVEL, BUCK-BOOST INVERTER**
EINPHASIGER DREISTUFIGER TIEF-HOCHSETZ-WECHSELRICHTER
ONDULEUR ABAISSEUR-ÉLÉVATEUR MONOPHASÉ À TROIS NIVEAUX

(30) Priority: 10.06.2022 TR 202209710
(43) Date of publication of application: 19.03.2025
(73) Proprietor: Aselsan Elektronik Sanayi ve Ticaret Anonim Sirketi, 06200 Ankara (TR)
(72) Inventor: DEMIRKUTLU, Eyyup, Yenimahalle/Ankara (TR); ISKENDER, Ires, Çankaya/Ankara (TR)
(74) Representative: Yamankaradeniz, Kemal
(86) International application number: PCT/TR2023/050531
(87) International publication number: WO 2023/239330

(56) References cited:
- CN-A- 107 809 182
- KUMAR ASHOK ET AL: "Operating Modes based Review of Single-Stage Buck-Boost Inverters", IECON 2019 - 45TH ANNUAL CONFERENCE OF THE IEEE INDUSTRIAL ELECTRONICS SOCIETY, IEEE, vol. 1, 14 October 2019 (2019-10-14), pages 1904 - 1909, XP033670345, DOI: 10.1109/IECON.2019.8927563
- GAO NING ET AL: "MOSFET-Switch-Based Transformerless Single-Phase Grid-Tied Inverter for PV Systems", IEEE JOURNAL OF EMERGING AND SELECTED TOPICS IN POWER ELECTRONICS, IEEE, PISCATAWAY, NJ, USA, vol. 10, no. 4, 8 March 2021 (2021-03-08), pages 3830 - 3839, XP011916837, ISSN: 2168-6777, [retrieved on 20210309], DOI: 10.1109/JESTPE.2021.3064587
- CHAMARTHI PHANI KUMAR ET AL: "A Single Stage Doubly Grounded Transformerless Inverter Topology With Buck-Boost Voltage Capability for Grid Connected PV Systems", IEEE TRANSACTIONS ON POWER DELIVERY, vol. 37, no. 6, 12 April 2022 (2022-04-12), US, pages 5044 - 5058, XP093080330, ISSN: 0885-8977, DOI: 10.1109/TPWRD.2022.3166506

## Description

### Field of the Invention

The invention relates to a single-phase, three-level buck-boost inverter.

In particular, the invention relates to transformerless single-phase buck-boost inverter for obtaining single-phase AC output voltage from DC input power source.

### State of the Art

The electrical energy taken from the regulated or unregulated DC voltage/current source is converted into AC voltage/current via inverters with or without transformer and transferred to the grid or to the load independent from the grid. Transformer inverters provide galvanic isolation between DC input source and AC output and can suppress leakage currents originating from DC input source. Transformerless inverters are disadvantageous in terms of volume, weight, efficiency and cost. In transformerless inverters, the cost, volume and weight are reduced by removing the transformer from the system, and the efficiency is increased by reducing the transformer-induced power losses. Various power converter topologies, switching strategies and filtering methods so as to suppress the leakage currents drawn from the input power supply in transformerless inverters, are taken into consideration.

Inverters with wide input voltage range are preferred so as to minimize the effect of large changes in input DC voltage on output AC voltage. In case the input DC voltage level is lower than the peak value of the AC voltage desired at the output, the inverter is expected to show boost feature, If the input DC voltage level is higher than the output AC voltage peak value, it is expected to show a buck feature.

As a result of the research made on the subject, US7411802B2 is encountered. The application describes a method of converting a direct current voltage from a direct current voltage source, in particular, a photovoltaic direct current voltage source, to an alternating current voltage. However, there is no mention of a transformerless, high-efficiency, three-level, high power density, wide input voltage range, single-phase three-level, buck-boost DC/AC inverter structure. Transformerless buck-boost DC/AC inverter structures are known in the art from CN 107 809 182 A, for instance, disclosing in figure 8 such an inverter. Furthermore, the following articles disclose similar arrangements: "Operating Modes based Review of Single-Stage Buck-Boost Inverters" from KUMAR ASHOK ET AL. and "MOSFET-Switch-Based Transformerless Single-Phase Grid-Tied Inverter for PV Systems" from GAO NING ET AL.
As a result, due to the abovementioned disadvantages and the insufficiency of the current solutions regarding the subject matter, a development is required to be made in the relevant technical field.

### Object of the Invention

The present invention aims to solve the abovementioned disadvantages by being inspired from the current conditions.

The main object of the present invention is to prevent capacitive leakage currents from flowing to the output from DC voltage sources.

Another object of the present invention is to provide voltage boosting, voltage reducing and converting alternating current into voltage form functions with a single direct current source at the input.

Another object of the present invention is to obtain a single-phase AC output voltage from a DC input power source within the scope of a buck-boost inverter.

Another object of the present invention is to provide a regulated and stable AC voltage at the output against wide voltage changes at the inverter input.

In order to fulfill the above-described purposes, the present invention is a transformerless, high-efficiency, three-level, high power density, wide input voltage range, single-phase three-level, buck-boost DC/AC inverter, characterized by the features of independent claim 1.

The structural and characteristic features of the present invention will be understood clearly by the following drawings and the detailed description made with reference to these drawings and therefore the evaluation shall be made by taking these figures and the detailed description into consideration.

### Figures Clarifying the Invention

**Figure** 1 is an illustrative view of the single-phase, three-level, buck-boost inverter, which is the subject of the invention.
**Figure 2** is an illustrative view of the state of the art.
**Figure 3** is an illustrative view of the state of the art.
**Figure 4** is an illustrative view of the state of the art.
**Figure 5** is an illustrative view of the single-phase, three-level, buck-boost inverter, which is the subject of the invention.
**Figure** 6 is an illustrative view of the switching signals when the peak value of the output voltage subject to the invention is lower than the input voltage.
**Figure** 7 is an illustrative view of the switching signals when the peak value of the output voltage subject to the invention is higher than the input voltage.

### Description of the Part References

**1:** First terminal
**2:** Second terminal
**3:** Third terminal
**4:** Fourth terminal
**5:** Fifth terminal
6: Sixth terminal
**7:** Seventh terminal
8: Eighth terminal
9: Ninth terminal
**10:** Tenth terminal
**11:** Eleventh terminal
**12:** Twelfth terminal
**T1, T2, T3, T4, T5, T6, T7, T8:** Semiconductor switch
**Vdc, Vdc₁**, **Vdc₂:** DC power supply
L1, **L2, Lg:** Inductor
**D1, D2, D3, D4:** Semiconductor switch (Diode)
**Cf, C1, C2:** Capacitor
Vg: Output AC voltage
501: DC input power supply
**502:** First semiconductor switch
**503:** Second semiconductor switch
**504:** Third semiconductor switch
**506:** Fourth semiconductor switch
**507:** Fifth semiconductor switch
**510:** Sixth semiconductor switch
**511:** Seventh semiconductor switch
**505:** First inductor
**508:** Second inductor
**509:** Eighth semiconductor switch (Diode)
**512:** Ninth semiconductor switch (Diode)
**513:** Capacitor
**514:** Inductor
**515:** AC output voltage

### Detailed Description of the Invention

In this detailed description, the preferred embodiments of the inventive single-phase, three-level, buck-boost inverter are described by means of examples only for clarifying the subject matter.

A transformerless, high-efficiency, three-level, high power density, wide input voltage range, single-phase three-level, buck-boost DC/AC inverter without DC link capacitor, the inverter comprising: a single DC input power supply (501) connected between a first terminal (1) and a second terminal (2); a first semiconductor switch (502) connected between the first terminal (1) and a third terminal (3); a second semiconductor switch (503) connected between the third terminal (3) and a fourth terminal (4) connected to ground; a third semiconductor switch (504) connected between the second terminal (2) and the fourth terminal (4); a first inductor (505) connected between the third terminal (3) and a fifth terminal (5); a second inductor (508) connected between the second terminal (2) and a sixth terminal (6); a fourth semiconductor switch (506) connected between the fifth terminal (5) and the fourth terminal (4); a fifth semiconductor switch (507) connected between the sixth terminal (6) and the fourth terminal (4); a sixth semiconductor switch (510) and an eighth semiconductor switch (509) serially connected between the fifth terminal (5) and a ninth terminal (9); a seventh semiconductor switch (511) and a ninth semiconductor switch (512) serially connected between the sixth terminal (6) and the ninth terminal (9); among which semiconductor switches at most two of the semiconductors are switched at high-frequency at the same time, wherein at least the first semiconductor switch (502), the second semiconductor switch (503), the third semiconductor switch (504), the fourth semiconductor switch (506), the fifth semiconductor switch (507), the sixth semiconductor switch (510) and the seventh semiconductor switch (511) are MOSFET or IGBT;
a driving control means configured to
operate the first semiconductor switch (502) and the second semiconductor switch (503) at high frequency, maintain the third semiconductor switch (504), the fifth semiconductor switch (507), the sixth semiconductor switch (510) and the eighth semiconductor switch (509) at ON state and maintain the fourth semiconductor switch (506), the seventh semiconductor switch (511) and the ninth semiconductor switch (512) at OFF state in a positive half-cycle of a buck mode of the inverter,
operate the first semiconductor switch (502) and the third semiconductor switch (504) at high frequency, maintain the second semiconductor switch (503), the fourth semiconductor switch (506), the seventh semiconductor switch (511) and the ninth semiconductor switch (512) at ON state and maintain the fifth semiconductor switch (507), the sixth semiconductor switch (510) and the eighth semiconductor switch (509) at OFF state in a negative half-cycle of the buck mode of the inverter,
operate the fourth semiconductor switch (506) and the eighth semiconductor switch (509) at high frequency, maintain the first semiconductor switch (502), the fifth semiconductor switch (507) and the sixth semiconductor switch (510) at ON state and maintain the second semiconductor switch (503), the third semiconductor switch (504), the seventh semiconductor switch (511) and the ninth semiconductor switch (512) at OFF state in a positive half-cycle of a boost mode of the inverter,
operate the fifth semiconductor switch (507) and the ninth semiconductor switch (512) at high frequency, maintain the first semiconductor switch (502), the fourth semiconductor switch (506) and the seventh semiconductor switch (511) at ON state and maintain the second semiconductor switch (503), the third semiconductor switch (504), the sixth semiconductor switch (510) and the eighth semiconductor switch (509) at OFF state in a negative half-cycle of the boost mode of the inverter and
turn the first semiconductor switch (502) OFF in zero crossing regions of AC voltage at the output to prevent capacitive leakage currents from flowing from the DC input power source (501) to an output.

It is possible for capacitive leakage currents to flow to the output from DC voltage sources with a large surface area such as solar panels. In circuit structures before a single-phase, three-level, buck-boost inverter, capacitive leakage currents originating from the input source are prevented by separating DC input terminals and output terminals. In a single-phase, three-level buck-boost inverter, DC input terminals (the first terminal (1), the second terminal (2)) and output terminals (the eleventh terminal (11), the twelfth terminal (12)) are separated to prevent capacitive leakage currents originating from the input source (501). In addition to this feature, the midpoint needed between the first terminal (1) and the second terminal (2) at the input is no longer needed with the help of a single-phase, three-level, buck-boost inverter. Voltage boosting, voltage reducing and converting alternating current into voltage form functions are possible with a single direct current source at the input with the help of a single-phase, three-level, buck-boost inverter. A single-phase, three-level, buck-boost inverter does not include any electrolytic capacitors in the topology. Since the input can be fed directly from a single source, there is no need to customize the inverter input. Since there are no series-connected electrolytic capacitors at the inverter input, there is no need for a balancing algorithm.

A transformerless single-phase buck inverter is provided for obtaining single-phase AC output voltage (515) from DC input power source (501) within the scope of a single-phase, three-level, buck-boost inverter.

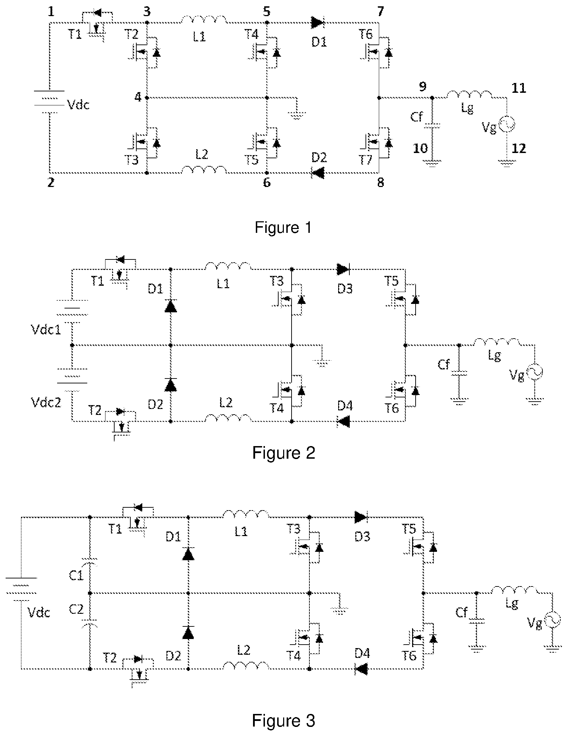

The circuit structure presented as a single-phase, three-level, buck-boost inverter is shown in Figure 1. A transformerless inverter is developed that is fed from a direct current source (501) connected to its terminals (the first terminal (1), the second terminal (2)) in Figure 1) and generates an output voltage (515) in the form of a single-phase alternating current sine wave at its terminals between the eleventh terminal (11) and the twelfth terminal (12) within the scope of a single-phase, three-level, buck-boost inverter. Output filter is located between the ninth terminal (9) and the tenth terminal (10) and between the eleventh terminal (11) and the twelfth terminal (12). Active switches, passive diodes and inductors are located between the first terminal (1), the second terminal (2) and the ninth terminal (9), the tenth terminal (10). A single-phase, three-level, buck-boost inverter is an inverter with a wide input voltage range since it has both buck and boost features. A single-phase, three-level buck-boost inverter is an inverter with high power density, as it does not contain an electrolytic capacitor and has at most two high-frequency switched semiconductors at the same time.

The single-phase transformerless inverter in Figure 2 has buck and boost features. A regulated and stable AC voltage can be obtained at the output against wide voltage changes at the inverter input. The leakage currents originating from the DC input source can be suppressed with the help of the appropriate switching strategy. On the other hand, the upper DC power supply powers the output in regions where the output voltage is positive, while the lower DC power supply powers the output in regions where the output voltage is negative. Although the topology has buck and boost features, the need for separate input power supplies for positive and negative half-cycles causes the input voltage utilization rate to decrease.

Figure 3 shows a buck-boost inverter fed from a single DC voltage source. In this inverter structure, which has a higher input voltage utilization rate than the inverter in Figure 2, power flow in positive and negative half-cycle is provided by using two series capacitors instead of two DC power supplies at the input. It is important in this inverter structure that the voltages on the series capacitors at the input in this inverter structure are balanced, so that the output AC voltage is stable and regulated. High currents flowing through the capacitors cause the capacitors to be large in size. Although the inverter in Figure 3 is a transformerless inverter, the capacitors in its structure cause the volume of the inverter to increase and the power density to decrease.

In the inverter shown in Figure 2, the need for two direct current sources at its input creates a necessity for voltage balancing between sources. This situation leads to the customization of the system at the entrance according to the topology.

In the inverter shown in Figure 3, although a single source is used at the input, two series electrolytic capacitors are needed. Additional control algorithms must be applied to keep the voltages of the electrolytic capacitors in balance in this inverter. Electrolytic capacitors not only increase the size of the circuit, but also limit the lifetime of the product.

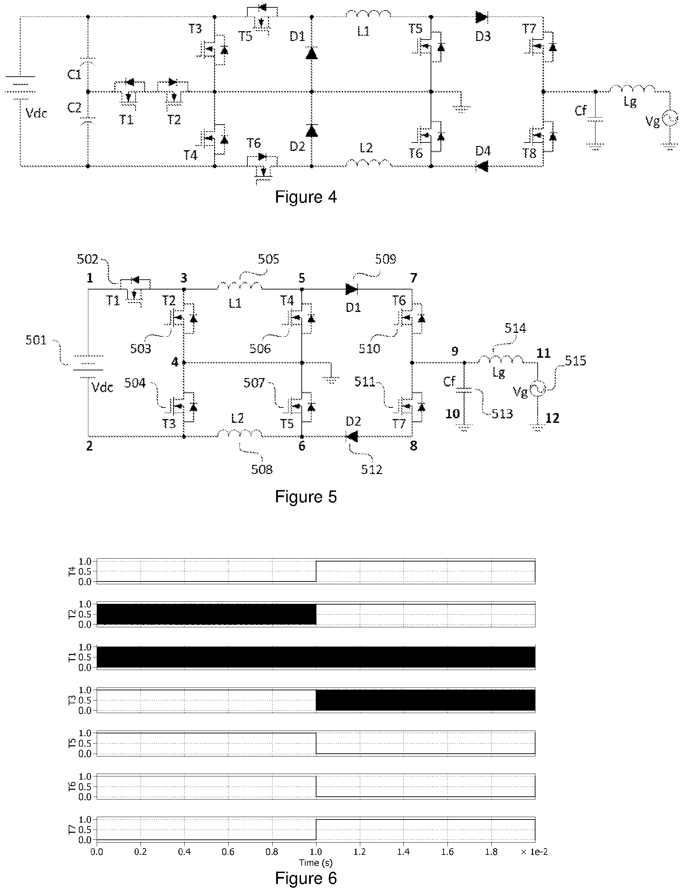

The inverter in Figure 4 solves the problem of using large electrolytic capacitors in the inverter in Figure 3. The current passing through the capacitors is reduced and the size of the capacitors can be reduced with the help of T1, T2, T3 and T4 semiconductor switches added to the input. However, this inverter uses four additional switches, increasing the cost and complicating the control algorithm.

The single-phase inverter, which is considered in a single-phase, three-level, buck-boost inverter structure, is shown in Figure 5 together with the numbers of the materials used.

In the case where the voltage level of the DC input power supply (501) is higher than the peak value of the output AC voltage (515) (Figure 6); a sine wave shape of the output voltage is formed with the DC/DC buck converter comprising the first semiconductor switch (502), the second semiconductor switch (503) and the first inductor (505) in the positive half-cycle of the output voltage. In the positive half cycle of the output voltage, the sixth semiconductor switch (510) is on, the seventh semiconductor switch (511) is off.

In the case where the voltage level of the DC input power supply (501) is higher than the peak value of the output AC voltage (Figure 6); in the negative half-cycle of the output voltage, it is formed by the DC/DC buck converter comprising the first semiconductor switch (502), the third semiconductor switch (504) and the second inductor (508). In this case, the fourth semiconductor switch (506), the fifth semiconductor switch (507) are off, and the eighth semiconductor switch (509) and the ninth semiconductor switch (512) are on. In the negative half cycle of the output voltage, the sixth semiconductor switch (510) is off, the seventh semiconductor switch (511) is on.

In the case where the voltage level of the DC input power supply (501) is higher than the peak value of the output AC voltage; the inverter operates in buck mode in order to generate the output voltage in sine wave form.

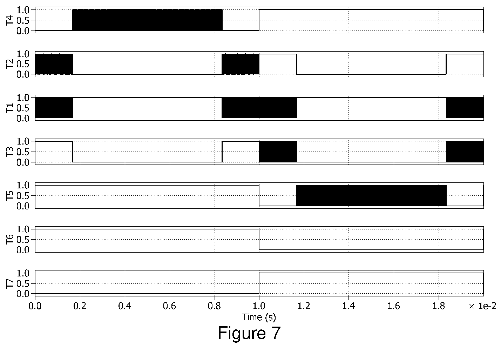

In the case where the voltage level of the DC input power supply (501) is lower than the peak value of the output AC voltage (Figure 7); in the positive half cycle of the output voltage, in the regions where the output AC voltage is lower than the DC input voltage level, the voltage waveform is created with the DC/DC buck converter comprising the first semiconductor switch (502), the second semiconductor switch (503) and the first inductor (505). In regions where the output AC voltage is higher than the DC input voltage level, the voltage waveform is created with the DC/DC boost converter comprising the first inductor (505), the fourth semiconductor switch (506) and the eighth semiconductor switch (509). In the positive half cycle of the output voltage, the sixth semiconductor switch (510) is on, the seventh semiconductor switch (511) is off.

In the case where the voltage level of the DC input power supply (501) is lower than the peak value of the output AC voltage (Figure 7); in the negative half cycle of the output voltage, in the regions where the absolute value of the output AC voltage is lower than the DC input voltage level, the voltage waveform is created with the DC/DC buck converter consisting of the first semiconductor switch (502), the third semiconductor switch (504) and the second inductor (508). In regions where the output AC voltage is higher than the absolute value of the DC input voltage level, voltage waveform is created with DC/DC boost converter consisting of the second inductor (508), the fifth semiconductor switch (507) and the ninth semiconductor switch (512). In the negative half cycle of the output voltage, the sixth semiconductor switch (510) is off, the seventh semiconductor switch (511) is on.

In the case where the voltage level of the input DC power supply (501) is lower than the peak value of the output AC voltage; in order to create the output voltage in sine wave form, the inverter operates in buck mode for regions below the output AC voltage (515) and DC input power supply (501) voltage level. The inverter operates in boost mode for regions above the output AC voltage (515) and DC input power supply (501) voltage level.

While the inverter is operating in buck mode, the first semiconductor switch (502), the second semiconductor switch (503) are switched at high frequency (in the 1kHz - 1MHz band range) in the positive half-cycle of the output voltage, the third semiconductor switch (504), the fifth semiconductor switch (507), the sixth semiconductor switch (510) and the eighth semiconductor switch (509) are in conduction and the fourth semiconductor switch (506), the seventh semiconductor switch (511) and the ninth semiconductor switch (512) are in cutoff.

While the inverter is operating in buck mode, the first semiconductor switch (502), the third semiconductor switch (504) are switched at high frequency (1kHz - 1MHz band) in the negative half-cycle of the output voltage, the second semiconductor switch (503), the fourth semiconductor switch (506), the seventh semiconductor switch (511) and the ninth semiconductor switch (512) are in conduction and the fifth semiconductor switch (507), the sixth semiconductor switch (510) and the eighth semiconductor switch (509) are in cutoff.

While the inverter is operating in boost mode, the fourth semiconductor switch (506) and the eighth semiconductor switch (509) are switched at high frequency (1kHz - 1MHz band range) in the positive half cycle of the output voltage, the first semiconductor switch (502), the fifth semiconductor switch (507), the sixth semiconductor switch (510) are in conduction and the second semiconductor switch (503), the third semiconductor switch (504), the seventh semiconductor switch (511) and the ninth semiconductor switch (512) are in cutoff.

While the inverter is operating in the boost mode, the fifth semiconductor switch (507) and the ninth semiconductor switch (512) are switched at high frequency (1kHz - 1MHz band) in the negative half-cycle of the output voltage, the first semiconductor switch (502), the fourth semiconductor switch (506), the seventh semiconductor switch (511) are in conduction and the second semiconductor switch (503), the third semiconductor switch (504), the sixth semiconductor switch (510) and the eighth semiconductor switch (509) are in cutoff.

The capacitor (513) and the inductor (514) are used to filter the transfer of high-frequency components generated by the inverter, which is considered within the scope of a single-phase, three-level, buck-boost inverter.

The prevention of high-frequency leakage capacitive currents instantaneous drawn from the input power source in the zero crossing regions of the output AC voltage is provided by the first semiconductor switch (502) in a single-phase, three-level, buck-boost inverter. The first semiconductor switch (502) turns off and the electrical connection between the input terminals and the output terminals is interrupted in the zero crossing regions of the output voltage. Thus, the problem of capacitive leakage current drawn from the input DC power source (501), which occurs in transformerless inverters, is suppressed by the present invention.

The fact that a single-phase, three-level, buck-boost inverter has two semiconductor switches switched at high frequency in one switching period ensures that the thermal power losses due to switching are low.

Switching two different switches at high frequency in the positive and negative cycles of the output AC voltage and in the operating periods in the buck-boost mode depending on whether the output AC voltage is lower or higher than the input DC voltage ensures the distribution of the thermal load on the heatsink.

There is no need to connect a single or two electrolytic capacitors in series to the input terminals of the transformerless inverter structure with the help of the single-phase, three-level, buck-boost inverter. Thus, the total volume of the inverter decreases and the power density increases with the deactivation of the electrolytic capacitors. In general, the fact that electrolytic capacitors do not have a long lifespan also causes a short lifespan of power converters that need electrolytic capacitors. In this context, the inverter introduced with the present invention, which does not need electrolytic capacitors, has a long life.

The first semiconductor switch (502), the second semiconductor switch (503), the third semiconductor switch (504), the fourth semiconductor switch (506), the fifth semiconductor switch (507), the sixth semiconductor switch (510) and the seventh semiconductor switch (511) in a single-phase, three-level, buck-boost inverter structure can be used as MOSFET, IGBT in Silicon or Silicon Carbide technology. The reverse parallel diode, which can be found in the switch, can be added externally.

The eighth semiconductor switch (509) and the ninth semiconductor switch (512), which are diodes contained in a single-phase, three-level, buck-boost inverter structure, can be used in Silicon or Silicon Carbide technology.

MOSFET is used as IGBT in Silicon or Silicon Carbide technology instead of the diodes which are the eighth semiconductor switch (509) and the ninth semiconductor switch (512) in a single-phase, three-level, buck-boost inverter structure. Thus, thermal losses on these switches can be reduced. In addition, the inverter can operate in two directions by using controllable semiconductors instead of the diodes. The inverter, which can convert input DC voltage to output AC voltage, can also convert single phase AC voltage to regulated DC voltage.

A single-phase, three-level, buck-boost inverter converts the DC input voltage taken from the solar panel or DC power source or battery to a single phase AC voltage, allows the same to be used for feeding electronic equipment or for transferring energy to the grid.

AC voltage obtained from the network, alternator or turbine is used for charging batteries or feeding DC electronic loads.

Since a single-phase, three-level, buck-boost inverter can operate in two directions, it is used in the conversion of non-regulated AC voltages obtained from wind turbines to regulated DC output voltage, and in battery charging units of electric vehicles.

The inverter revealed within the scope of a single-phase, three-level, buck-boost inverter is used in renewable energy, military land/sea/air vehicles, rail systems, medical devices, electric vehicle applications.

A single-phase, three-level, buck-boost inverter and a transformerless, high-efficiency, three-level, high power density, wide input voltage range, single-phase DC/AC inverter are provided.

## Claims

1. A transformerless, high-efficiency, three-level, high power density, wide input voltage range, single-phase three-level, buck-boost DC/AC inverter without DC link capacitor, the inverter comprising: a single DC input power supply (501) connected between a first terminal (1) and a second terminal (2); a first semiconductor switch (502) connected between the first terminal (1) and a third terminal (3); a second semiconductor switch (503) connected between the third terminal (3) and a fourth terminal (4) connected to ground; a third semiconductor switch (504) connected between the second terminal (2) and the fourth terminal (4); a first inductor (505) connected between the third terminal (3) and a fifth terminal (5); a second inductor (508) connected between the second terminal (2) and a sixth terminal (6); a fourth semiconductor switch (506) connected between the fifth terminal (5) and the fourth terminal (4); a fifth semiconductor switch (507) connected between the sixth terminal (6) and the fourth terminal (4); a sixth semiconductor switch (510) and an eighth semiconductor switch (509) serially connected between the fifth terminal (5) and a ninth terminal (9); a seventh semiconductor switch (511) and a ninth semiconductor switch (512) serially connected between the sixth terminal (6) and the ninth terminal (9); among which semiconductor switches at most two of the semiconductors are switched at high-frequency at the same time, wherein at least the first semiconductor switch (502), the second semiconductor switch (503), the third semiconductor switch (504), the fourth semiconductor switch (506), the fifth semiconductor switch (507), the sixth semiconductor switch (510) and the seventh semiconductor switch (511) are MOSFET or IGBT;
the inverter comprising further driving control means configured to operate the first semiconductor switch (502) and the second semiconductor switch (503) at high frequency, maintain the third semiconductor switch (504), the fifth semiconductor switch (507), the sixth semiconductor switch (510) and the eighth semiconductor switch (509) at ON state and maintain the fourth semiconductor switch (506), the seventh semiconductor switch (511) and the ninth semiconductor switch (512) at OFF state in a positive half-cycle of a buck mode of the inverter,
operate the first semiconductor switch (502) and the third semiconductor switch (504) at high frequency, maintain the second semiconductor switch (503), the fourth semiconductor switch (506), the seventh semiconductor switch (511) and the ninth semiconductor switch (512) at ON state and maintain the fifth semiconductor switch (507), the sixth semiconductor switch (510) and the eighth semiconductor switch (509) at OFF state in a negative half-cycle of the buck mode of the inverter,
operate the fourth semiconductor switch (506) and the eighth semiconductor switch (509) at high frequency, maintain the first semiconductor switch (502), the fifth semiconductor switch (507) and the sixth semiconductor switch (510) at ON state and maintain the second semiconductor switch (503), the third semiconductor switch (504), the seventh semiconductor switch (511) and the ninth semiconductor switch (512) at OFF state in a positive half-cycle of a boost mode of the inverter,
operate the fifth semiconductor switch (507) and the ninth semiconductor switch (512) at high frequency, maintain the first semiconductor switch (502), the fourth semiconductor switch (506) and the seventh semiconductor switch (511) at ON state and maintain the second semiconductor switch (503), the third semiconductor switch (504), the sixth semiconductor switch (510) and the eighth semiconductor switch (509) at OFF state in a negative half-cycle of the boost mode of the inverter, wherein when the first semiconductor switch (502) is turned off during the buck mode in zero crossing regions of the AC voltage at the output, capacitive leakage currents are prevented from flowing from the DC input power source (501) to the output.

2. The transformerless, high-efficiency, three-level, high power density, wide input voltage range, single-phase three-level, buck-boost DC/AC inverter without DC link capacitor according to the claim 1, wherein the eighth semiconductor switch (509) and the ninth semiconductor switch (512) are each a diode.

3. The transformerless, high-efficiency, three-level, high power density, wide input voltage range, single-phase three-level, buck-boost DC/AC inverter without DC link capacitor according to the claim 1, wherein the eighth semiconductor switch (509) and the ninth semiconductor switch (512) are each a MOSFET or an IGBT.

## Patentansprüche

1. Transformatorloser, hocheffizienter, dreistufiger, eine hohe Leistungsdichte und einen breiten Eingangsspannungsbereich aufweisender, einphasiger, dreistufiger Tief-Hochsetz-DC/AC-Wechselrichter ohne Zwischenkreiskondensator, wobei der Wechselrichter umfasst: eine einzelne DC-Eingangsstromversorgung (501), die zwischen einem ersten Anschluss (1) und einem zweiten Anschluss (2) geschaltet ist; einen ersten Halbleiterschalter (502), der zwischen dem ersten Anschluss (1) und einem dritten Anschluss (3) geschaltet ist; einen zweiten Halbleiterschalter (503), der zwischen dem dritten Anschluss (3) und einem vierten Anschluss (4), der mit Masse verbunden ist, geschaltet ist; einen dritten Halbleiterschalter (504), der zwischen dem zweiten Anschluss (2) und dem vierten Anschluss (4) geschaltet ist; einen ersten Induktor (505), der zwischen dem dritten Anschluss (3) und einem fünften Anschluss (5) geschaltet ist, einen zweiten Induktor (508), der zwischen dem zweiten Anschluss (2) und einem sechsten Anschluss (6) geschaltet ist; einen vierten Halbleiterschalter (506), der zwischen dem fünften Anschluss (5) und dem vierten Anschluss (4) geschaltet ist; einen fünften Halbleiterschalter (507), der zwischen dem sechsten Anschluss (6) und dem vierten Anschluss (4) geschaltet ist; einen sechsten Halbleiterschalter (510) und einen achten Halbleiterschalter (509), die in Reihe zwischen dem fünften Anschluss (5) und dem neunten Anschluss (9) geschaltet sind, einen siebten Halbleiterschalter (511) und einen neunten Halbleiterschalter (512), die in Reihe zwischen dem sechsten Anschluss (6) und dem neunten Anschluss (9) geschaltet sind, wobei unter diesen Halbleiterschaltern höchstens zwei der Halbleiter gleichzeitig mit hoher Frequenz geschaltet sind, wobei mindestens der erste Halbleiterschalter (502), der zweite Halbleiterschalter(503), der dritte Halbleiterschalter (504), der vierte Halbleiterschalter (506), der fünfte Halbleiterschalter (507), der sechste Halbleiterschalter (510) und der siebte Halbleiterschalter (511) MOSFET oder IGBT sind,
wobei der Wechselrichter ferner Antriebssteuerungsmittel umfasst, die dazu konfiguriert sind, den ersten Halbleiterschalter (502) und den zweiten Halbleiterschalter (503) bei hoher Frequenz zu betreiben, den dritten Halbleiterschalter (504), den fünften Halbleiterschalter (507), den sechsten Halbleiterschalter (510) und den achten Halbleiterschalter (509) im EIN-Zustand zu halten und den vierten Halbleiterschalter (506), den siebten Halbleiterschalter (511) und den neunten Halbleiterschalter (512) im AUS-Zustand in einem positiven Halbzyklus eines Tiefsetzmodus des Wechselrichters zu halten,den ersten Halbleiterschalter (502) und den dritten Halbleiterschalter (504) bei hoher Frequenz zu betreiben, den zweiten Halbleiterschalter (503), den vierten Halbleiterschalter (506), den siebten Halbleiterschalter (511) und den neunten Halbleiterschalter (512) im EIN-Zustand zu halten und den fünften Halbleiterschalter (507), den sechsten Halbleiterschalter (510) und den achten Halbleiterschalter (509) im AUS-Zustand in einem negativen Halbzyklus des Tiefsetzmodus des Wechselrichters zu halten,
den vierten Halbleiterschalter (506) und den achten Halbleiterschalter (509) bei hoher Frequenz zu betreiben, den ersten Halbleiterschalter (502), den fünften Halbleiterschalter (507) und den sechsten Halbleiterschalter (510) im EIN-Zustand zu halten und den zweiten Halbleiterschalter (503), den dritten Halbleiterschalter (504), den siebten Halbleiterschalter (511) und den neunten Halbleiterschalter (512) im AUS-ZUSTAND in einem positiven Halbzyklus eines Hochsetzmodus des Wechselrichters zu halten,
den fünften Halbleiterschalter (507) und den neunten Halbleiterschalter(512) bei hoher Frequenz zu betreiben, den ersten Halbleiterschalter (502), den vierten Halbleiterschalter (506) und den siebten Halbleiterschalter (511) im EIN-Zustand zu halten und den zweiten Halbleiterschalter (503), den dritten Halbleiterschalter (504), den sechsten Halbleiterschalter (510) und den achten Halbleiterschalter (509) im AUS-Zustand in einem negativen Halbzyklus des Hochsetzmodus des Wechselrichters zu halten, wobei, wenn der erste Halbleiterschalter (502) während des Tiefsetzmodus in Nulldurchgangsbereichen der AC-Spannung am Ausgang abgeschaltet wird, verhindert wird, dass kapazitive Leckströme von der DC-Eingangsstromquelle (501) zum Ausgang fließen.

2. Transformatorloser, hocheffizienter, dreistufiger, eine hohe Leistungsdichte und einen breiten Eingangsspannungsbereich aufweisender, einphasiger, dreistufiger Tief-Hochsetz-DC/AC-Wechselrichter ohne Zwischenkreiskondensator nach Anspruch 1, wobei der achte Halbleiterschalter (509) und der neunte Halbleiterschalter(512)jeweils eine Diode sind.

3. Transformatorloser, hocheffizienter, dreistufiger, eine hohe Leistungsdichte und einen breiten Eingangsspannungsbereich aufweisender, einphasiger, dreistufiger Tief-Hochsetz-DC/AC-Wechselrichter ohne Zwischenkreiskondensator nach Anspruch 1, wobei der achte Halbleiterschalter (509) und der neunte Halbleiterschalter (512) jeweils ein MOSFET oder ein IGBT sind.

## Revendications

1. Onduleur CC/CA abaisseur-élévateur, monophasé à trois niveaux, à large plage de tension d'entrée, à densité de puissance élevée, à trois niveaux, à haut rendement, sans transformateur sans condensateur de liaison CC, l'onduleur comprenant : une seule alimentation électrique d'entrée CC (501) connectée entre une première borne (1) et une deuxième borne (2) ; un premier commutateur à semi-conducteur (502) connecté entre la première borne (1) et une troisième borne (3) ; un deuxième commutateur à semi-conducteur (503) connecté entre la troisième borne (3) et une quatrième borne (4) connectée à la masse ; un troisième commutateur à semi-conducteur (504) connecté entre la deuxième borne (2) et la quatrième borne (4) ; un premier inducteur (505) connecté entre la troisième borne (3) et une cinquième borne (5) ; un second inducteur (508) connecté entre la deuxième borne (2) et une sixième borne (6) ; un quatrième commutateur à semi-conducteur (506) connecté entre la cinquième borne (5) et la quatrième borne (4) ; un cinquième commutateur à semi-conducteur (507) connecté entre la sixième borne (6) et la quatrième borne (4); un sixième commutateur à semi-conducteur (510) et un huitième commutateur à semi-conducteur (509) connectés en série entre la cinquième borne (5) et une neuvième borne (9) ; un septième commutateur à semi-conducteur (511) et un neuvième commutateur à semi-conducteur (512) connectés en série entre la sixième borne (6) et la neuvième borne (9) ; parmi lesquels commutateurs à semi-conducteur, au plus deux des semi-conducteurs sont commutés à haute fréquence en même temps, au moins ledit premier commutateur à semi-conducteur (502), ledit deuxième commutateur à semi-conducteur (503), ledit troisième commutateur à semi-conducteur (504), ledit quatrième commutateur à semi-conducteur(506), ledit cinquième commutateur à semi-conducteur (507), ledit sixième commutateur à semi-conducteur (510) et ledit septième commutateur à semi-conducteur (511) étant des MOSFET ou des IGBT ;
l'onduleur comprenant en outre des moyens de commande d'entraînement configurés pour actionner le premier commutateur à semi-conducteur (502) et le deuxième commutateur à semi-conducteur (503) à haute fréquence, maintenir le troisième commutateur à semi-conducteur (504), le cinquième commutateur à semi-conducteur (507), le sixième commutateur à semi-conducteur (510) et le huitième commutateur à semi-conducteur (509) à l'état MARCHE et maintenir le quatrième commutateur à semi-conducteur (506), le septième commutateur à semi-conducteur (511) et le neuvième commutateur à semi-conducteur (512) à l'état ARRÊT dans un demi-cycle positif d'un mode abaisseur de l'onduleur, actionner le premier commutateur à semi-conducteur (502) et le troisième commutateur à semi-conducteur (504) à haute fréquence, maintenir le deuxième commutateur à semi-conducteur (503), le quatrième commutateur à semi-conducteur (506), le septième commutateur à semi-conducteur (511) et le neuvième commutateur à semi-conducteur (512) à l'état MARCHE et
maintenir le cinquième commutateur à semi-conducteur (507), le sixième commutateur à semi-conducteur (510) et le huitième commutateur à semi-conducteur (509) à l'état ARRÊT dans un demi-cycle négatif du mode abaisseur de l'onduleur,
actionner le quatrième commutateur à semi-conducteur (506) et le huitième commutateur à semi-conducteur (509) à haute fréquence, maintenir le premier commutateur à semi-conducteur (502), le cinquième commutateur à semi-conducteur (507) et le sixième commutateur à semi-conducteur (510) à l'état MARCHE et maintenir le deuxième commutateur à semi-conducteur (503), le troisième commutateur à semi-conducteur (504), le septième commutateur à semi-conducteur (511) et le neuvième commutateur à semi-conducteur (512) à l'état ARRÊT dans un demi-cycle positif d'un mode élévateur de l'onduleur,
actionner le cinquième commutateur à semi-conducteur (507) et le neuvième commutateur à semi-conducteur (512) à haute fréquence, maintenir le premier commutateur à semi-conducteur (502), le quatrième commutateur à semi-conducteur (506) et le septième commutateur à semi-conducteur (511) à l'état MARCHE et maintenir le deuxième commutateur à semi-conducteur (503), le troisième commutateur à semi-conducteur (504), le sixième commutateur à semi-conducteur (510) et le huitième commutateur à semi-conducteur (509) à l'état ARRÊT dans un demi-cycle négatif du mode élévateur de l'onduleur, lorsque le premier commutateur à semi-conducteur (502) est éteint durant le mode abaisseur
dans les zones de passage par zéro de la tension CA
au niveau de la sortie, les courants de fuite capacitifs sont empêchés de s'écouler de la source d'alimentation d'entrée CC (501) vers la sortie.

2. Onduleur CC/CA abaisseur-élévateur, monophasé à trois niveaux, à large plage de tension d'entrée, à densité de puissance élevée, à trois niveaux, à haut rendement, sans transformateur sans condensateur de liaison CC selon la revendication 1, ledit huitième commutateur à semi-conducteur (509) et ledit neuvième commutateur à semi-conducteur (512) étant chacun une diode.

3. Onduleur CC/CA abaisseur-élévateur, monophasé à trois niveaux, à large plage de tension d'entrée, à densité de puissance élevée, à trois niveaux, à haut rendement, sans transformateur sans condensateur de liaison CC selon la revendication 1, ledit huitième commutateur à semi-conducteur (509) et ledit neuvième commutateur à semi-conducteur (512) étant chacun un MOSFET ou un IGBT.
